# EUROPEAN PATENT APPLICATION

(11) **EP 3 896 544 A1**
(43) Date of publication of application: **20.10.2021**
(21) Application number: 20169613.5
(22) Date of filing: 15.04.2020
(51) Int. Cl.: G05B 23/02

(54) **SYSTEM, APPARATUS AND METHOD FOR GENERATING AUTOMATICALLY A COMPONENT FAULT TREE OF A SYSTEM**

(71) Applicant: Siemens Industry Software NV, 3001 Leuven (BE)
(72) Inventor: Bonner, Maria, 90491 Nürnberg (DE); Kupriyanov, Olexiy, 90765 Fürth (DE); Zeller, Marc, 81243 München (DE)
(74) Representative: Maier, Daniel Oliver

(57) **Abstract**

System, apparatus and method for generating automatically a component fault tree of an investigated system (140) is disclosed. The system (140) comprises at least one of software components (142) and hardware components (144)The method comprising/initiating the steps of generating the component fault tree (132), wherein input and output failure modes of the component fault tree (132) are generated and interconnected based on failure modes of a component (142) in the system (140), wherein the component (142) is one of the software components (142) and the hardware components (144); connecting the input failure modes (IFM) of the component fault tree (132) to the output failure modes (OFM) of the component fault tree (132) via internal failure propagation paths based on, preferably automatically generated, pessimistic propagation path of the failure propagation; and refining the input failure modes (IFM) by generating a failure simulation of at least one failure using the component fault tree (132).

## Description

The invention relates to a system, method and apparatus for generating automatically a component fault tree of a system, particularly a technical system on the basis of failure modes of system components of the technical system.

Technical systems can be found in a wide range of domains such as aerospace, transport systems, healthcare systems, automotive systems and industrial automation systems. With the growing system complexity of such systems, also the need for safety assessment of the system is increasing in order to meet the high-quality demands in these technical domains. The goal of a safety assessment process is to identify all failures that cause hazardous situations and to demonstrate that the probability of occurrence of such failures is sufficiently low.

Component fault trees (CFTs) provide a model and component-based methodology for fault tree analysis FTA which supports a modular and compositional safety analysis of the respective system. However, the generation of a component fault tree of a complex system can be cumbersome and prone to errors. Particularly with the increasing use of software components in the system, the generation of the fault trees may be increasingly challenging. For example, machine learning components (e.g. neural networks) or other black box software components cannot not be analyzed conventionally. In such cases, the dependency on experts to manually analyze the software components increases and may not yield in reliable CFTs.

Accordingly, there is a need to provide a system, method and apparatus for generating automatically a component fault tree of an investigated system including hardware and software components.

For example, a method for generating automatically a component fault tree (CFT) of a system is disclosed. The system comprises at least one of software components and hardware components, the method comprising/initiating the steps of generating the component fault tree (CFT), wherein input and output failure modes of the component fault tree (CFT) are generated and interconnected based on failure modes of a component in the system, wherein the component is one of the software components and the hardware components; connecting the input failure modes (IFM) of the component fault tree (CFT) to the output failure modes (OFM) of the component fault tree (CFT) via internal failure propagation paths based on, preferably automatically generated, pessimistic propagation path of the failure propagation; and refining the input failure modes (IFM) by generating a failure simulation of at least one failure using the component fault tree (CFT).

In another example, an apparatus for generating automatically a component fault tree (CFT) of a system is disclosed. The system comprises at least one of software components and hardware components, the apparatus comprising a firmware module comprising an integrated development module configured to enable generation of the component fault tree (CFT), wherein input and output failure modes of the component fault tree (CFT) are generated and interconnected based on failure modes of a component in the system, wherein the component is one of the software components and the hardware components; a failure propagation module configured to enable connection of the input failure modes (IFM) of the component fault tree (CFT) to the output failure modes (OFM) of the component fault tree (CFT) via internal failure propagation paths based on an automatically generated pessimistic propagation path of the failure modes; a simulation module configured to enable refinement of the input failure modes (IFM) by generating a failure simulation of at least one failure using the component fault tree (CFT).

In another example, a distributed computing system for generating automatically a component fault tree (CFT) of a system comprising at least one of software components and hardware components, the distributed computing system comprising at least one apparatus as described above; and a simulation unit communicatively coupled to the apparatus, the simulation unit configured to generate an executable digital model of the system to generate the failure simulation, wherein the digital model comprises a digital representation of the system and the component updated to reflect operating conditions of the system and the component.

In an embodiment the simulation module of the apparatus according to the present invention is configured to initiate execution of the digital model of the system to generate the failure simulation.

A further example may include a non-transitory computer readable medium encoded with executable instructions (such as a software component on a storage device) that when executed, causes at least one processor to carry out this described method.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

The system that for which the CFT is generated may be part of an industrial environment. As used herein "industrial environment" refers to a facility for manufacture, production that may be semi or completely automated. For example, industrial automation environment, laboratory industrial environment, building industrial environment and the like. Further, according to the present invention, industrial environment may include a combination of one or more industrial automation environments, laboratory industrial environments, building industrial environments.

The industrial environment has multiple of data that may be generated within the environment or may be associated with the environment. For example, sensor data may be generated within the industrial environment and the control data may be associated with the environment even if it is not generated within the environment. In another example, sensor data may be synthesized to reflect one or more operating conditions of the industrial environment. The sensor data may be analyzed using neural networks to enable performance of one or more operations autonomously. Such operations may include triggering a control signal to one or more actuators in the industrial environment.

For example, the system may be an autonomous vehicle that includes multiple sensing and actuating units which are used for navigation. The autonomous vehicle also includes controllers (hardware components) that execute or enable execution of the neural networks (software components) that process the sensor data to define the navigation path. The present invention advantageously automates the generation of the CFT for the controller and the neural network.

In another example, the system may include an industrial asset such as a turbine with hardware components and a software controller used to monitor and control the hardware components. The software controller may include machine learning components that may be used to predict condition of the turbine based on operation conditions of the hardware components. To validate the prediction and the operation of the machine learning components, the present invention proposed an advantageous method to automate generation of the CFTs that enable such validation.

During the operation of the system, one or more events or patterns in the operation data may be identified. In such an embodiment, the method may include generating the CFT automatically during runtime of the system in response to an observed event. In another embodiment, the system may be at the design stage of the lifecycle. In such an embodiment, errors/events identified during design of the system may trigger generation of the CFT automatically.

The present invention advantageously avoids the requirement of experts to manually analyze failure modes and subsequent propagation within a software component, such as a neural network. Further, the present invention overcomes the need for cumbersome approaches to generate the failure behavior of a component / system by manually specifying the failure behavior, e.g. in form of a fault tree. Furthermore, the present invention is applicable to legacy software components whose logic may be difficult to analyze. Specifically considering artificial intelligence and machine learning components, the present invention presents an approach to derive and synthesize the failure behavior. For example, in case of neural networks, the present invention advantages analyses the multiple layers including the hidden layers. Furthermore, the present invention is useful in scenarios where the machine learning component including one or more functions are a black box. In other words, the present invention is useful for failure analysis when logic and/or implementation of the functions of the machine learning component is hidden.

The present invention proposes a CFT generation methodology that breaks down the complexity of the system into manageable components. Further, the CFT generation is aligned with model-based system engineering. Thereby enabling a comprehensive CFT that accurately analyzes failure modes in the system.

According to an embodiment of the present invention, the method may include generation of a system architecture model using system modelling languages such as SysML or ARCADIA. In another embodiment, pre-generated system architecture models may be used as input. Using the system architecture model, the virtual representation of the component comprising inports and outports may be generated. The inports and outports are defined by a value and a type. As used herein "inport" refers to virtual input interface port of the component and "outport" refers to virtual output interface port of the component. The connection between the inports and the outports define the failure propagation.

According to an embodiment of the present invention, results the simulation unit including the digital model of the system (software, hardware, mechatronics) may be validated for accuracy and detail. For example, the simulation unit may be configured with virtual prototyping environments to validate the digital model. Further, the digital model may be generated to allow injection of failures into the simulation, for example, at the interfaces of the systems' components. In another embodiment, a validated digital model of the system and the components is received from a model database.

As used herein, the model database refers to a database of digital models related to the system and the components. The model database may be an external, community owned database of the digital models. The simulation unit may be configured to receive the digital models and validate them for the system and components.

Using the system architecture model and the digital model of the system, CFT are automatically generated by the method disclosed in the present invention.

The method includes generating the CFT, wherein input and output failure modes of the CFT are generated and interconnected based on failure modes of the component in the system, wherein the component is one of the software components and the hardware components. In an embodiment, generation of input/output failure modes may be according to the type of the specified inports/outports of the component. The method may further include generating connection between the inports and the input failure modes (IFM) and generating connection between the outports and the output failure modes (OFM).

The method may include generating input failure modes (IFM) and output failure modes (OFM) based on a mapping between connector types of ports of the component and failure types of the failure modes. In other words, the generation of the input/output failure modes is based on a mapping between connector types at interfaces of the components and the failure types of failure modes.

For example, if the connector type is Boolean, the failure type may be one of a false positive, a false negative, an omission, a commission, too early indication, too late indication. In another example, if the connector type is an Integer, Float or a Time connector, then the failure type may be one of too high indication, too low indication, an omission, a commission, too early indication, too late indication. The generated input and output failure modes provide all possible failures which can occur at the interfaces of the component.

The method includes connecting the input failure modes (IFM) of the component fault tree (CFT) to the output failure modes (OFM) of the component fault tree (CFT) via internal failure propagation paths based on preferably automatically generated pessimistic propagation path of the failure propagation. The present invention advantageously uses a worst case (pessimistic) assumption for the failure propagation within the component. The method may include generating the pessimistic propagation path by connection each input failure mode with each of the output failure modes of the CFT.

The method includes refining the input failure modes (IFM) by generating a failure simulation of at least one failure using the component fault tree (CFT). To refine the input failure modes (IFM) the method may include injecting failures in the executable digital model of the system to generate the failure simulation. The failure simulation advantageously reduces the number of failure propagation connections between the input failure modes and the output failure modes. Accordingly, the failure simulation is advantageously used to determine actual failure propagation of the component.

As used herein "failure simulation" refers to simulation results generated from the injection of the failure in the CFT. For example, input of a CFT element is injected with signals/parameters/values that are associated with an input failure mode. The resulting output failure modes simulates how the component may behave for the input. Accordingly, the resulting output failure modes may be referred to as the failure simulation.

The method may include determining failure propagation of the failures injected the digital model of the component and the behavior at the interfaces of the component is observed to determine which output failure modes may occur. In an embodiment, the failure propagation analysis may be performed for all input failure modes individually. In another embodiment, the failure propagation analysis may be performed for combinations of input failure modes. The results of the failure simulations may lead to a reduction of probable the failure propagations within the component.

The method may include validating the output failure modes (OFM) using the failure simulation, wherein failure propagation between a specific input and a specific output failure mode is verified by the failure simulation. In an embodiment, the failure simulation may show that triggering one or more failures does not lead to the occurrence of a specific output failure mode. In such an embodiment, the respective failure propagation (represented by a connection between input and output failure mode) can be removed from the generated CFT.

The method may include determining at least one input failure mode with no propagation to the output failure modes (OFM) and refining the component fault tree by excluding the at least one input failure mode.

The method of the present invention may include updating the CFT based on the failure simulation. Further, updation of the failure modes can be achieved by varying the failure values input to the digital model. For example, multiple different integer values for a failure mode of the type 'too low' may be excluded from the CFT. In another example, if the failure simulations show that a failure mode has no connections between the input failure modes and the output failure modes, then such input failure modes and output failure modes can be deleted from the generated CFT.

Using the afore-mentioned methodology, the resulting CFT elements can then be composed automatically to create a Reliability, Availability, Maintainability, and Safety (RAMS) analysis model for the system. Accordingly, the method may include performing root cause analysis on the basis of the generated CFT.

The technical effect of the present invention is that a completely automatic CFT can be generated particularly for software components. The present invention considers the deterministic nature of the software components and therefore limits the occurrence of events/failures within the CFT. With regard to hardware components, the present invention advantageously combines Failure Modes, Effects, And Diagnostic Analysis (FMEDA) to the output failure models to automatically generate the CFT. In an embodiment, the output failure mode may be linked with the FMEDA results using an OR gate.

Further, the technical effect of the present invention is that the same is suitable for systems that are critical to safety of the environment in which it operates. By starting with the pessimistic propagation path and then refining through failure simulations the present invention ensures that the CFT is never too optimistic.

In the following, possible embodiments of the different aspects of the present invention are described in more detail with reference to the enclosed figures.
- Fig. 1: shows a block diagram of a possible example embodiment of a system and an apparatus for generating automatically a component fault tree of an investigated system according to an aspect of the present invention;
- Fig. 2: shows a flowchart of a possible example embodiment of a method for generating automatically a component fault tree of a system according to a further aspect of the present invention;
- Fig. 3: shows schematic representation components and connections for an example investigated system according to the present invention;
- Fig. 4: shows failure modes of the system in Fig. 3 for illustration of the operation of a method and apparatus according to the present invention;
- Fig. 5: shows schematically pessimistic propagation paths of failure modes in the CFT element for the system in Fig. 3 to illustrate the operation of the method and apparatus according to the present invention;
- Fig. 6: shows schematically refinement of the CFT element for the system in Fig. 3 to illustrate the operation of the method and apparatus according to the present invention.;
- Fig. 7: shows schematically the generated CFT element for the system in Fig. 3 to illustrate the operation of the method and apparatus according to the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

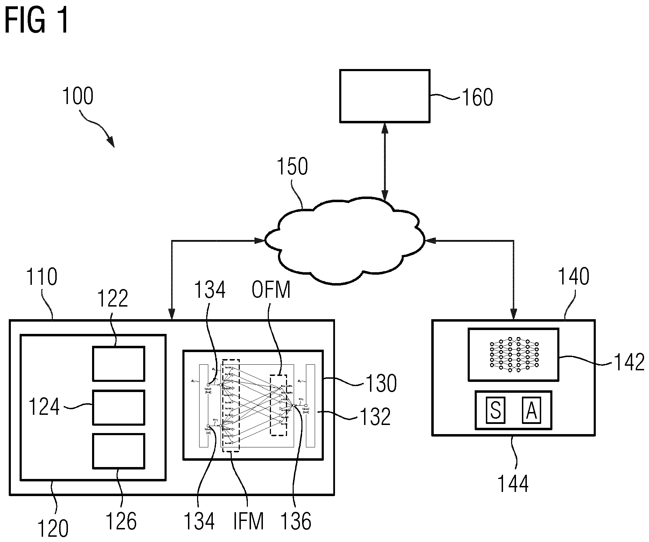

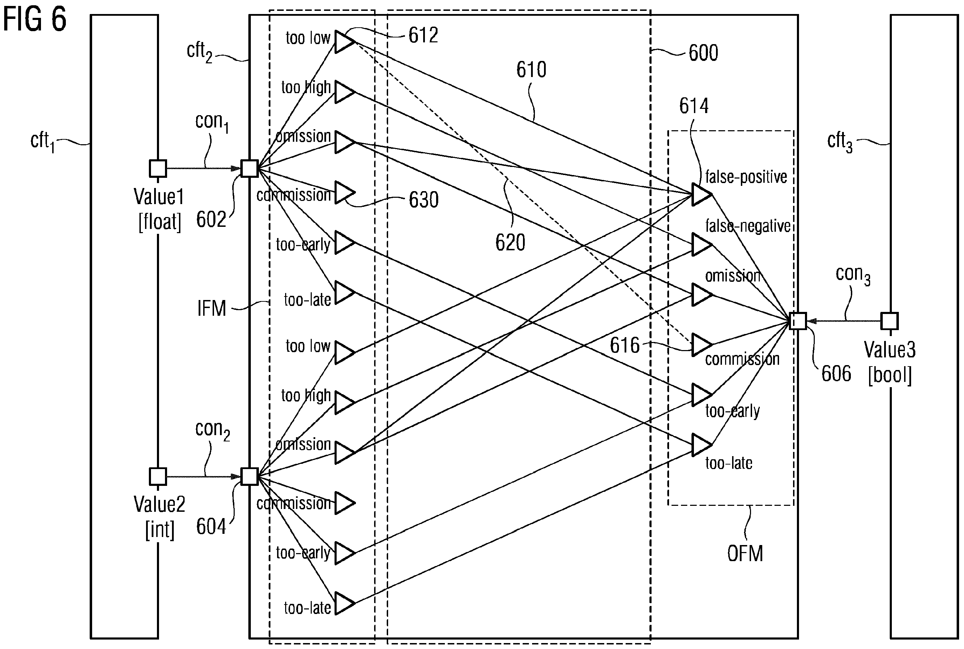

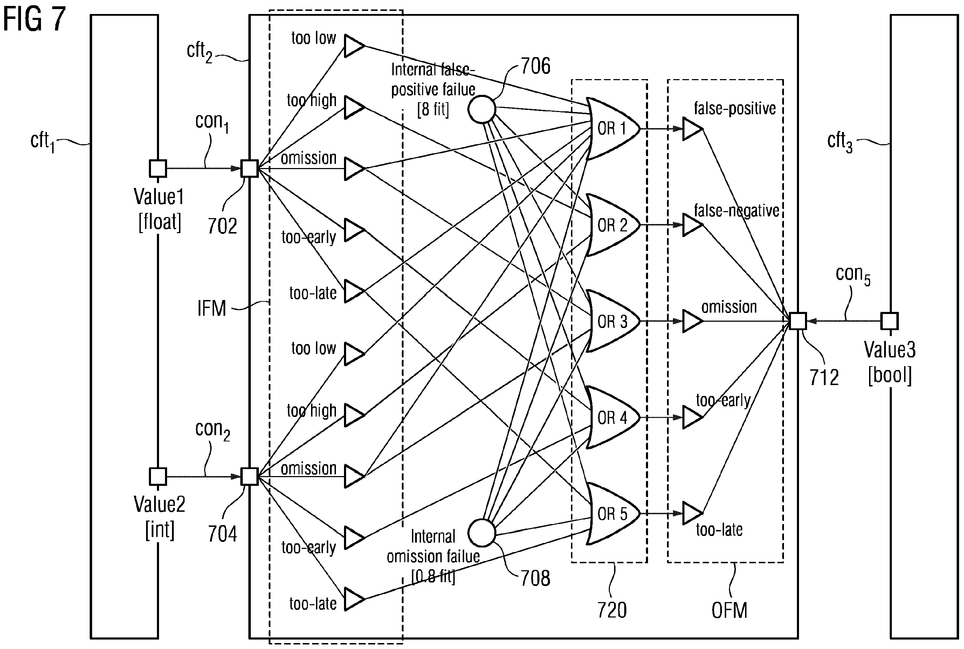

FIG 1 illustrates a block diagram of a system 100 and apparatus 110 for automatically generating Component Failure Trees (CFTs) 132 for the system 140, according to an embodiment of the present invention. The CFT 132 is merely for illustration. Figs 6 and 7 indicate the resulting CFT according to the present invention.

The system 100 includes a cloud and/or edge computing platform 150 configured to communicate with the apparatus 110, the system 140 and a simulation unit 160. In an embodiment, the cloud/edge computing platform 150 may be configured to execute the functions of the apparatus 110 in an embodiment. As used herein, "computing environment" refers to a processing environment comprising configurable computing physical and logical resources, for example, networks, servers, storage, applications, services, etc., and data distributed over a network. The computing platform 150 is configured with a memory and a processor to store and execute software instructions executed by the apparatus 110.

For example, in FIG 1 the system 140 is an autonomous vehicle 140. A person skilled in the art will appreciate that the example of the autonomous vehicle does not limit the scope of the invention to vehicular systems. The example is used to illustrate the advantage of the present invention for safety-critical systems like the autonomous vehicle. Nevertheless, the present invention is also any type of system that includes hardware and/or software components.

The autonomous vehicle 140 includes a controller 142. The autonomous vehicle 140 also includes sensing and actuating units 144. Example sensing units include a radar light detection and ranging sensors, vision sensors, proximity sensors et cetera. Example actuating units include a steering unit, a braking unit et cetera.

The controller 142 includes a firmware module that is a combination of hardware and memory capable of executing software instructions. As used herein, "memory" refers to all computer readable media for example nonvolatile media, volatile media, and transmission media except for transitory, propagating signal. The memory stores the computer program instructions defined by software components such as modules. These modules may include an event detection module, a driving environment module et cetera. The modules may be provided with neural networks or may be able to execute the neural networks.

The sensing units generate sensor data indicating environment of the autonomous vehicle 140. For example, the sensor data indicates position, location of the autonomous vehicle 140 and objects in an environment in which the vehicle 140 moves. In an embodiment, the sensor data may be pre-recorded or taken from another autonomous vehicle not shown in FIG 1. The controller 142 is communicatively coupled to the sensing units and configured to generate control signals that control operation of the autonomous vehicle using the actuating units.

For example, the controller 142 is configured to identify safety critical features in the sensor data reflecting the environment of the autonomous vehicle 140. The safety critical components may include the sensor data that are critical to the safety of the environment and the autonomous vehicle 140. The controller 142 may further be configured to generate emergency control signals to control operation of the autonomous vehicle 140 based on the safety critical features.

The neural networks may be used to generate the control signals or to enable generation of the control signals by the controller 142. As indicated above, the control signals may be generated to ensure safety of the autonomous vehicle 140 and/or the environment. Therefore, it is advantages to automatically generate CFTs for the components 142 and 144 of autonomous vehicle 140.

The apparatus 110 a firmware module 120 and a display unit 130. The display unit 130 may be an interactive display unit configured with a Graphical User Interface (GUI) to display the generated CFT 132. As used herein the firmware module 120 refers to the capable of executing and storing software instructions defined by modules for example an integrated development module 122, a failure propagation module 124 and a simulation module 126.

The integrated development module 122 is configured to enable generation of the CFT 132. The CFT 132 indicates virtual representation of components 142 and 144 of the autonomous vehicle 140. CFT 132 includes CFT elements cft1, cft2 and cft3. The CFT elements are connected through inports and outports. For example, for cft2 the inports 134 are connected to the outport 136 based on the failure modes. In Fig. 1, cft1 is for component 1 i.e. sensor S, cft2 is for the neural network 142 and cft3 is for the actuator A. The CFT 132 illustrates input failure modes IFM and output failure modes OFM and their interconnections based on failure modes of the neural network 142.

In an embodiment, the integrated development module 122 is configured to receive inputs from a software architecture model of the neural network 142. The software architecture model is configured to generated explanation for the neural network 142. For example, connections between nodes of the neural network 142 are analyzed based on transformations of a node input to a node output. The software architecture model enables determination of the failure modes of the neural network 142.

The failure propagation module 124 is configured to enable connection of the input failure modes IFM of the CFT 132 to the output failure modes OFM of the CFT 132. The connection may be made via internal failure propagation paths based on pessimistic propagation path of the failure modes. In an embodiment, the failure propagation module 124 is configured to generate the pessimistic propagation path by connecting each of the input failure modes IFM to all the output failure modes OFM.

The simulation module 126 is configured to enable refinement of the input failure modes IFM by generating a failure simulation of at least one failure using the CFT 132. The failure simulation is generated using output of the simulation unit 160. The simulation unit 160 is configured to generate or store one or more digital models associated with the autonomous vehicle 140. The digital models simulate the operation of the autonomous vehicle 140 and its components 142 and 144. For example, the digital model for the neural network 142 is configured to predict output of the neural network 142 for a given input. In an embodiment, the at least one failure is simulated using the digital model and may be compared with the failure propagation seen in the failure simulation generated using the CFT 132. The comparison is used to refine the input failure modes IFM.

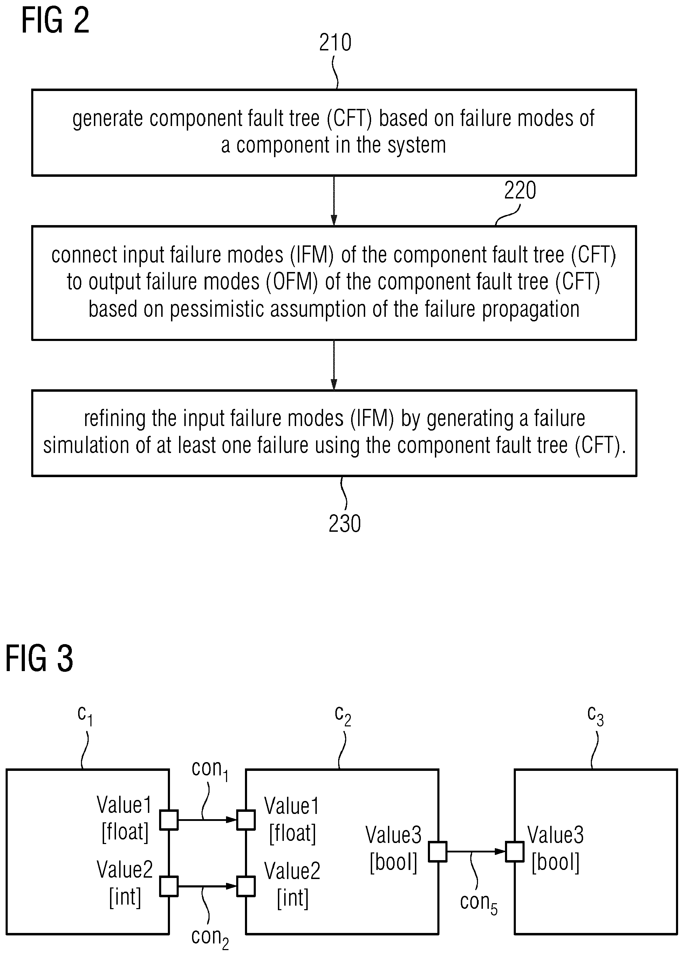

Fig. 2 shows a flowchart of a possible example embodiment of a method for generating automatically a component fault tree of a system according to a further aspect of the present invention.

The method begins at step 210 by generating component fault tree (CFT) based on failure modes of a component in the system. The CFT includes input failure modes (IFM) and output failure modes (OFM). The IFM and OFM are generated and interconnected based on failure modes of the component in the system. The component may be software components and/or hardware components.

In an embodiment, generation of input/output failure modes may be according to the type of the specified inports/outports of the component. The step 210 may further include generating connection between the inports and the input failure modes (IFM) and generating connection between the outports and the output failure modes (OFM).

At step 220, the input failure modes (IFM) are connected to the output failure modes (OFM) via internal failure propagation paths based on preferably automatically generated pessimistic propagation path of the failure propagation. A worst case (pessimistic) assumption for the failure propagation within the component is made at step 220. Further, step 220 includes generating the pessimistic propagation path by connection each IFM with each of the OFM of the CFT.

At step 230 the input failure modes (IFM) are refined by generating a failure simulation of at least one failure using the component fault tree (CFT). To refine the input failure modes (IFM), step 230 may include injecting failures in the executable digital model of the system to generate the failure simulation. The failure simulation advantageously reduces the number of failure propagation connections between the input failure modes and the output failure modes. Accordingly, the failure simulation is advantageously used to determine actual failure propagation of the component.

The step 230 may further include determining failure propagation of the failures injected the digital model of the component and the behavior at the interfaces of the component is observed to determine which output failure modes may occur. At step 230, the OFM are validated using the failure simulation by verifying the failure propagation between a specific input and a specific output failure mode using the failure simulation. In an embodiment, the failure simulation may show that triggering one or more failures does not lead to the occurrence of a specific output failure mode. In such an embodiment, the respective failure propagation (represented by a connection between input and output failure mode) can be removed from the generated CFT.

Figs 3 to 7 illustrates the steps 210 to 230 for an example system with three components. For the purpose of explanation, the components include a combination of hardware and software components. A person skilled in the art will appreciate that the example is merely illustrative. The present invention can be enabled with components that may all be software or all hardware.

Fig. 3 shows schematic representation components c1, c2 and c3 for an example investigated system according to the present invention. For the purpose of explanation, c1 is a sensor, c2 is a machine learning module and c3 is an actuator. The machine learning module c2 analyses data from the sensor c1 to generate signals to the actuator c3.

The sensor c1 has the outports valuel of type 'float' and value2 of type 'int'. The machine learning module c2 has two inports valuel of type 'float' and value2 of type 'int' and one outport value3 of type 'bool'. The actuator c3 has one inport value3 of type 'bool'. The outport and inport with valuel of type `float' are connected using the connection con1. Similarly, the outport and inport with value2 of type 'int' are connected using the connection con2, Further, the outport and inport with value3 of type 'bool' are connected using the connection con3.

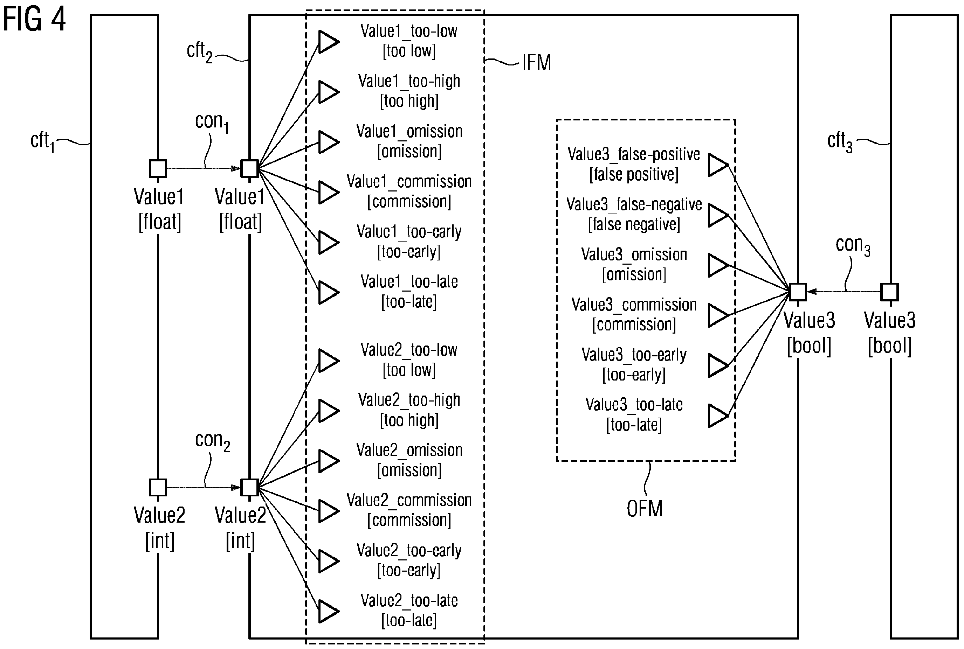

In an embodiment, the inports, outports and the connections con1, con2, con3 are generated using a system architecture model. The system architecture model may be generated using system modelling languages such as SysML/ARCADIA. The inports and the outports are mapped to input and output failure modes as described in Fig. 4. To perform the mapping, CFT elements cft1, cft2 and cft3 are generated for the components c1, c2 and c3.

Fig. 4 shows failure modes IFM and OFM of the system in Fig. 3 for illustration of the operation of a method and apparatus according to the present invention. The failure modes IFM and OFM are visualized for the machine learning module c2 and the associated CFT element cft2. A person skilled in the art will appreciate that similar mapping of the failure modes can be done for the components c1 and c2.

The failure modes IFM and OFM are generated based on a mapping of the inports and the outports to failure modes. The mapping may be based on the connectors, the port values and types. For each CFT element cfti ∈ CFT, a set of input failure modes IFM and a set of output failure modes OFM are generated based on the connector types of the inputs *IN* (*cfci*) and outputs *OUT* (*cfcᵢ*)*.*

The below table is an example of the mapping between connector type and failure type that is used to generate the IFM and the OFM. A person skilled in the art would appreciate that the mapping is configurable based on the system and is not limited to the below example.

| **Connector Type** | **Failure Type** |
|---|---|
| Boolean | false positive, false negative, omission, commission, too early, too late |
| Integer, Float, Time | too high, too low, omission, commission, too early, too late |

The input failure modes IFM and output failure modes OFM of the CFT element cft2 are generated according to the type of the specified input ports valuel 'float' and value2 'int' and output port value3 'bool' of the component c2. For cft2 a set of 6 failure modes may be generated for each in/outports of component c2 based on the mapping indicated above. Accordingly, the input failure modes IFM with the failure types 'too high', 'too low', 'omission', 'commission', 'too early', 'too late' for the two inports of c2 each as well as input failure modes with the failure types 'false positive', 'false negative', 'omission', 'commission', 'too early', 'too late' for the one outport of c2.

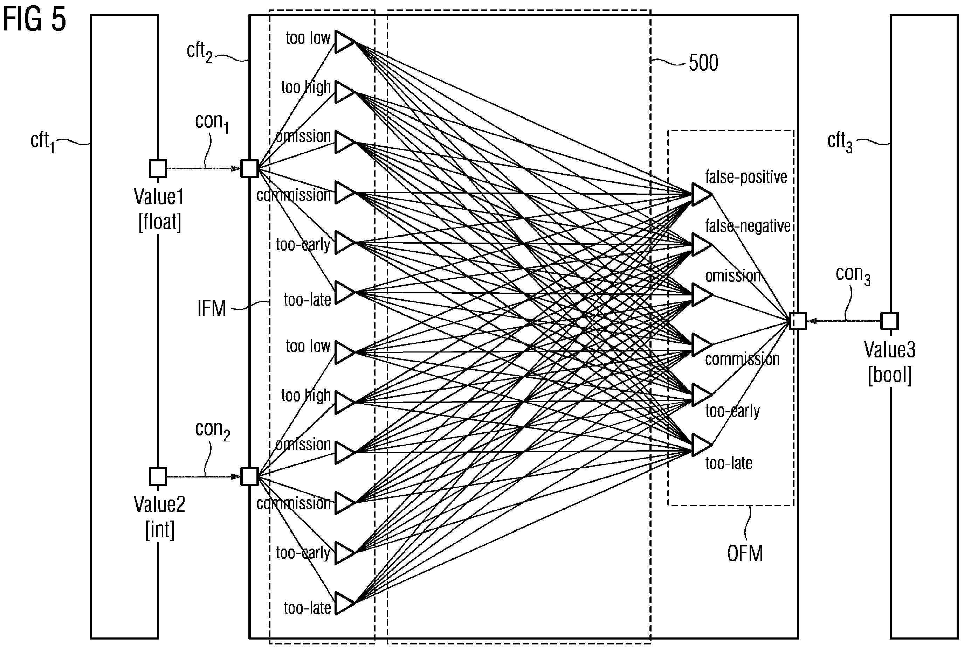

Fig. 5 shows schematically pessimistic propagation paths 500 of failure modes in the CFT element cft2 for the system in Fig. 3 to illustrate the operation of the method and apparatus according to the present invention.

The failure propagation between IFM and OFM of the component c2 is based on a worst-case assumption, i.e. each input failure mode IFM is connected with each of the output failure modes OFM of the CFT element cft2. This approach is very pessimistic, because each failure on one of the two inports leads all output failure modes at the outport of c2. The worst-case assumption is indicated by the pessimistic propagation paths 500. The pessimistic propagation paths 500 while being very pessimistic, is also valid, and provides a hypothesis of the failure propagation. Therefore, in case of safety-critical systems, the generation of the pessimistic propagation paths 500 enables preparedness for the entire spectrum of failure.

Fig. 6 shows schematically refinement 600 of the CFT element cft2 for the system in Fig. 3 to illustrate the operation of the method and apparatus according to the present invention.

Simulations of the system (including component c2) are generated using digital models of the system. These digital models may already be generated and validated. The digital models are executable. In an embodiment, the digital model is the system architecture model generated in Fig. 3.

Simulations generated by injecting failures at the inports 602, 604 of c2 are referred to as failure simulations. For example, the failures are injected by changing signals/parameters/values at the inports 602, 604 for the component c2. The injection of the failure may be according to the failure types 'too high', 'too low', 'omission', 'commission', 'too early', and 'too late' at each of the components' inports. In an embodiment, the component c1 is a thermal sensor and the signal from the thermal sensor may be too high. Accordingly, 'too high' is the failure type of the failure injected at inports 602 and 604.

The injected failure stimulates operation of the system including the component c2. The resulting output is the failure simulation and may indicate a discrepancy from the intended behavior. The output failure modes OFM of cft2 can be measured or observed at the outport 606 of c2. For example, the discrepancy may be omission of a signal at the outport 606. Further, monitors may be created for the failure simulations that check if the injected failure lead to the generated failure behavior specified by the associated output failure mode OFM.

The failure simulation can lead to different results. For example, the injection of a failure leads to an input failure mode IFM, which in turn leads to one of the output failure modes OFM. In this example, the failure propagation 610 between the specific input failure mode 612 and the specific output failure 614 mode is verified by the failure simulation.

In another example, the injection of the input failure mode 612 does not lead to a specific output failure mode 616, then the failure propagation 620 between the input failure mode 612 and the output failure mode 616 is deleted, since it could not be verified by the failure simulation.

In yet another example, there is an input failure mode 630 which do not have any outgoing connections. Alternatively, there is an output failure modes which have no incoming connections 616. The input failure mode 630 and the output failure mode 616 can be removed from the CFT element cft2.

The resulting failure propagations after the aforementioned refinement actions is indicated by the number 600. The failure propagations 600 are generated after validation and pruning. Accordingly, Fig. 6 represents the updated CFT element cft2 after the failure propagations are validated and refined.

Fig. 7 shows schematically the generated CFT element cft2 for a system to illustrate the operation of the method and apparatus according to the present invention. In the present embodiment, the component c2 is a hardware device such as a pump.

The CFT element cft2 is associated with the hardware device. The CFT element cft2 has inports 702, 704 and outport 712. The inports 702 and 704 are shown to be connected to cft1 with connections con1, con2 and the outport 712 is connected to cft3 with the connection con5.

With hardware/mechatronic components internal failures 706 and 708 can be identified by the Failure Modes, Effects, and Diagnostic Analysis (FMEDA) method. In the present example, the internal failures are false positive failure 706 and omission failure 708.

For example, the FMEDA may be used to arrive at the below tabular column.

| Compone nt | Failure Mode IFM | Failure Rate [FIT] | Diagnostic Coverage | Dangerou s Detected [FIT] | Dangerous Undetected [FIT] |
|---|---|---|---|---|---|
| c2 | Omission 708 | 16.0 | 0.95 | 15.2 | 0.8 |
| c2 | False positive 706 | 80 | 0.90 | 72 | 8 |

Based on the rows in the FMEDA sheet, for each internal failure 706 and 708 identified by the FMEDA, a basic event (indicated by the numerals 706 and 708) is created in cft2. Further, a failure rate resulting from the dangerous undetected value of the internal failure mode 706 and 708 is determined. The newly created basic event to each OFM using OR gates 720. The OR gates 720 enable worst-case analysis for the internal failures 706 and 708.

In an embodiment, the internal failures 706 and 708 may be added manually by an expert.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be applied to system/apparatus claims.

## Claims

1. A method for generating automatically a component fault tree (132) of a system, wherein the system comprises at least one of software components (142) and hardware components (144), the method comprising/initiating the steps of:
generating the component fault tree (132), wherein input and output failure modes of the component fault tree (132) are generated and interconnected based on failure modes of a component (142) in the system (140), wherein the component (142) is one of the software components (142) and the hardware components (144);
connecting the input failure modes (IFM) of the component fault tree (132) to the output failure modes (OFM) of the component fault tree (132) via internal failure propagation paths based on, preferably automatically generated, pessimistic propagation path of the failure propagation; and
refining the input failure modes (IFM) by generating a failure simulation of at least one failure using the component fault tree (132).

2. The method according to claim 1, wherein the software components (142) comprise at least one machine learning component including one or more functions, wherein logic and/or implementation of the functions of the machine learning component (142) is hidden.

3. The method according to one of the preceding claims, wherein a root cause analysis is performed on the basis of the generated component fault tree (132).

4. The method according to one of the preceding claims, wherein the component fault tree (132) is generated automatically during runtime of the system (140) in response to an observed event and/or during design of the system (140) .

5. The method according one of the preceding claims, further comprising:
generating input failure modes (IFM) and output failure modes (OFM) based on a mapping between connector types of ports (134, 136) of the component (142) and failure types of the failure modes.

6. The method according to one of the preceding claims, further comprising:
generating the pessimistic propagation path between the input failure modes (IFM) and output failure modes(OFM), wherein each input failure modes (IFM) leads to each of the output failure modes (OFM).

7. The method according to one of the preceding claims, further comprising:
validating the output failure modes (OFM) using the failure simulation, wherein failure propagation between a specific input and a specific output failure mode is verified by the failure simulation.

8. The method according to claim 1, wherein refining the input failure modes (IFM) comprises:
determining at least one input failure mode with no propagation to the output failure modes (OFM); and
refining the component fault tree (132) by excluding the at least one input failure mode.

9. The method according to claim 1, further comprising:
generating virtual representation of the component (142) comprising inports and outports, wherein the inports and outports are defined by a value and a type;
generating connection between the inports and the input failure modes (IFM); and
generating connection between the outports and the output failure modes (OFM).

10. An apparatus (110) for generating automatically a component fault tree (132) of a system (140), wherein the system comprises at least one of software components (142) and hardware components (144), the apparatus (110) comprising:
a firmware module (120) comprising:
an integrated development module (122) configured to enable generation of the component fault tree (132), wherein input and output failure modes of the component fault tree (132) are generated and interconnected based on failure modes of a component in the system, wherein the component is one of the software components (142) and the hardware components (144);
a failure propagation module (124) configured to enable connection of the input failure modes (IFM) of the component fault tree (132) to the output failure modes (OFM) of the component fault tree (132) via internal failure propagation paths based on, preferably automatically generated, pessimistic propagation path of the failure modes;
a simulation module (126) configured to enable refinement of the input failure modes (IFM) by generating a failure simulation of at least one failure using the component fault tree (132).

11. The apparatus (110) according to claim 10, wherein the firmware module is configured to execute at least one of the method steps according to claims 1-9.

12. The apparatus (110) according one of the preceding claims and particularly to claim 10, wherein the simulation module (124) is configured to initiate execution of an executable digital model of the system to generate the failure simulation, wherein the digital model comprises a digital representation of the system and the component (142) updated to reflect operating conditions of the system (140) and the component (142).

13. A distributed computing system (100) for generating automatically a component fault tree (132) of a system (140), wherein the system comprises at least one of software components (142) and hardware components (144), the distributed computing system (100) comprising:
at least one apparatus (110) according to claims 10-12; and
a simulation unit (160) communicatively coupled to the apparatus, the simulation unit configured to generate an executable digital model of the system to generate the failure simulation, wherein the digital model comprises a digital representation of the system and the component updated to reflect operating conditions of the system and the component.

14. A computer program product, comprising computer readable code, that when executed on a processor, performs any one of the method steps of one or more of the method claims 1 to 9.
